# EUROPEAN PATENT APPLICATION

(11) **EP 4 600 972 A1**
(43) Date of publication of application: **13.08.2025**
(21) Application number: 24809973.1
(22) Date of filing: 07.02.2024
(51) Int. Cl.: H01B 1/22, G01L 1/22

(54) **CONDUCTIVE MATERIAL, PREPARATION METHOD THEREFOR, PRESSURE SENSOR, BATTERY CELL AND ELECTRIC DEVICE**

(30) Priority: 19.05.2023 CN 202310572276
(71) Applicant: Contemporary Amperex Technology Co., Limited, Ningde, Fujian 352100 (CN)
(72) Inventor: ZHU, Cuicui, Ningde, Fujian 352100 (CN); ZHANG, Jijun, Ningde, Fujian 352100 (CN); WANG, Shaofei, Ningde, Fujian 352100 (CN); WEI, Yimin, Ningde, Fujian 352100 (CN); LI, Yang, Ningde, Fujian 352100 (CN)
(74) Representative: Frick, Robert
(86) International application number: PCT/CN2024/076633
(87) International publication number: WO 2024/239724

(57) **Abstract**

The present application discloses a conductive material and a method for preparing the same, a pressure sensor, a battery cell, and an electrical device. The conductive material includes a flexible substrate and conductive particles dispersed in the flexible substrate, wherein the conductive particles comprise a temperature rise material and a temperature drop material, the temperature rise material is a material having a resistivity that increases as the temperature rises, the temperature drop material is a material having a resistivity that decreases as the temperature rises, and the ratio of the temperature drop material to the temperature rise material is set so that within a temperature range of -40°C to +200°C, the absolute value of the change rate of the resistivity of the conductive material is less than or equal to 0.01. By mixing the temperature rise material and the temperature drop material, the resistivity of the mixed material does not change significantly when the temperature changes, that is, the resistivity of the mixed material is substantially not affected by the temperature, such that the detection sensitivity of a sensor at different temperatures is improved, and detection errors caused by a temperature change are reduced.

## Description

### TECHNICAL FIELD

The present application relates to the technical field of measurements, and more particularly to a conductive material and a method for preparing the same, a pressure sensor, a battery cell, and an electrical device.

### BACKGROUND

A pressure sensor is an element that outputs an applied pressure in the form of an electrical signal. It has the characteristics of a simple structure, low power, and fast dynamic response. It is widely applied in a variety of fields. For example, it can be embedded in a battery to detect behaviors such as electrode expansion inside the battery, reflect the evolution of the internal structure of the battery, and learn the working status of the battery in real time. The temperature causes a huge interference with the measurements by a pressure sensor. Achieving temperature suppression is the key to determining whether the sensor can be applied in practice, especially for the complex temperature-changing application environment inside lithium batteries.

### SUMMARY OF THE INVENTION

The main technical problem to be solved by the present application is to provide a conductive material and a method for preparing the same, a pressure sensor, a battery cell, and an electrical device. They can prevent the resistivity of the conductive material from changing significantly as the temperature changes, that is, the resistivity of the conductive material is substantially not affected by the temperature, such that the detection sensitivity of a sensor at different temperatures is improved, thereby reducing detection errors caused by a temperature change.

In a first aspect, the present application provides a conductive material, including a flexible substrate and conductive particles dispersed in the flexible substrate, wherein the conductive particles comprise a temperature rise material and a temperature drop material, the temperature rise material is a material having a resistivity that increases as the temperature rises, the temperature drop material is a material having a resistivity that decreases as the temperature rises, and a ratio of the temperature drop material to the temperature rise material is set so that within a temperature range of -40°C to +200°C, an absolute value of a change rate of the resistivity of the conductive material is less than or equal to 0.01. By mixing the temperature rise material and the temperature drop material, the resistance of a mixed material does not change significantly when the temperature changes, that is, the resistivity of the mixed material is substantially not affected by the temperature, such that the detection sensitivity of a sensor at different temperatures is improved, thereby reducing detection errors caused by a temperature change.

In some embodiments of the present application, the ratio of the temperature drop material to the temperature rise material is set so that within the temperature range of +25°C to +80°C, the absolute value of the change rate of the resistivity of the conductive material is less than or equal to 0.008. The closer the change rate of the resistivity of the conductive material is to zero, the better, so that the resistivity of the conductive material is insensitive to the temperature, thereby reducing the errors of the acquired resistance caused by temperature change.

In some embodiments of the present application, the ratio of the temperature drop material to the temperature rise material is set so that within the temperature range of -40°C to +200°C, the absolute value of the change rate of the resistivity of the conductive material is less than or equal to 0.01. Through such setting, the resistance of the material is substantially not affected by the temperature, such that the detection sensitivity of a sensor at different temperatures is improved, thereby reducing detection errors caused by a temperature change.

In some embodiments of the present application, the ratio of the temperature drop material to the temperature rise material is set so that within the temperature range of +25°C to +80°C, the absolute value of the change rate of the resistance of the conductive material is less than or equal to 0.008. Through such setting, the impact of the temperature on the resistance of the material is effectively reduced within the conventional temperature range.

In some embodiments of the present application, within the temperature range of -40°C to +200°C, the ratio of the absolute values of the temperature coefficient of resistance of the temperature rise material to that of the temperature drop material is in a range of 30:1-1:30, and optionally 15:1-1:10. The temperature coefficient of resistance is the relative change in the resistance value of the material when the temperature changes by 1 degree Celsius. Through such setting, the ratio of the content of the temperature rise material to that of the temperature drop material can be controlled within a preferable range, such that the difference in content between the two is not too large, so as to avoid non-uniform mixing due to the large difference in content between the two.

In some embodiments of the present application, within the temperature range of -40°C to +200°C, the absolute value of the ratio of the change rate of the resistivity of the temperature rise material to that of the temperature drop material is in a range of 25:1-1:25, and optionally 10:1-1:5. Through such setting, the ratio of the content of the temperature rise material to that of the temperature drop material can be controlled within a preferable range, such that the difference in content between the two is not too large, so as to avoid non-uniform mixing due to the large difference in content between the two.

In some embodiments of the present application, the mass ratio of the temperature rise material to the temperature drop material is in a range of 15:1-1:20, and optionally in a range of 12:1-1:8. Through such setting, the ratio of the content of the temperature rise material to that of the temperature drop material can be controlled within a preferable range, such that the difference in content between the two is not too large, so as to avoid non-uniform mixing due to the large difference in content between the two.

In some embodiments of the present application, the conductivity of the temperature rise material is greater than 1 S·m⁻¹; and/or the conductivity of the temperature drop material is greater than 1 S·m⁻¹; and/or the conductivity of the conductive material is greater than 1 S·m⁻¹. By controlling the conductivity and improving the conductance of the conductive material, the sensor is enabled to provide more sensitive detection.

**In** some embodiments of the present application, the temperature rise material includes one or more of graphite, gold powder, silver powder, nickel powder, zinc-chromium alloy, nickel-copper alloy, and the like. By selecting these materials, the sensor is enabled to provide more sensitive detection.

**In** some embodiments of the present application, the temperature drop material includes one or more of carbon nanotubes, Ketjen black, graphene, carbon black, and ceramic materials with metal oxides of manganese, cobalt, nickel, and copper as main materials. By selecting these materials, the sensor is enabled to provide more sensitive detection.

In some embodiments of the present application, the conductive particles include graphite particles and carbon nanotube particles, and the mass ratio of the graphite particles to the carbon nanotube particles is in a range of 1:1-1:20, and optionally 1:9-1:15. By using a mixture of graphite particles and carbon nanotube particles, the conductivity is stronger, and the conductive particles can be made into nanometer scale, making them easier to disperse and mix more uniformly, thereby making the signal feedback more sensitive and improving the sensitivity.

In some embodiments of the present application, the carbon nanotube particles include multi-walled carbon nanotube particles, and the multi-walled carbon nanotube particles have an outer diameter in a range of 6-13 nm and a length in a range of 2.5-20 µm. By selecting carbon nanotubes of this size, the conductive performance of the material is better and the detection is more sensitive.

In some embodiments of the present application, the graphite particles have a particle size Dv50 in a range of 7-10 µm. By selecting graphite of this size, the conductive performance of the material is better and the detection is more sensitive.

In some embodiments of the present application, the mass ratio of the flexible substrate to the conductive particles is in a range of 15:1-5:1, and optionally 12:1-8:1. Through such setting, the elasticity and conductivity of the sensitive layer can be improved.

In some embodiments of the present application, the flexible substrate includes one or more of thermoplastic polyurethane, polyvinyl alcohol, chloroprene rubber, nitrile rubber, styrene-butadiene block copolymer, and polyacrylic acid, and optionally is an aliphatic thermoplastic polyurethane. Through such setting, the durability and wear resistance of the sensitive layer can be improved.

In a second aspect, the present application provides a pressure sensor, which includes an electrode layer and a sensitive layer. The sensitive layer is made of any of the above-mentioned conductive materials, which can improve the detection sensitivity and extend the applicable temperature.

In some embodiments of the present application, the sensitive layer includes a base layer and at least two protrusion structures protruding from the base layer at different heights, each protrusion structure includes at least one protrusion, each protrusion is located on a side of the base layer facing the electrode layer, and the contact area between each protrusion and the electrode layer is configured to change with the change of the pressure applied to the electrode layer. By setting two protrusion structures of different heights, the pressure sensitive range of the protrusion structure of each height is set differently, which enables the pressure sensor to be suitable for detection environments at various pressures, thereby effectively obtaining the measurement range and sensitivity of the pressure sensor.

In a third aspect, the present application provides a method for preparing a pressure sensitive layer, including: providing a flexible substrate slurry; adding conductive particles to the flexible substrate slurry, wherein the conductive particles comprise a temperature rise material and a temperature drop material, the temperature rise material is a material having a resistivity that increases as the temperature rises, the temperature drop material is a material having a resistivity that decreases as the temperature rises, the ratio of the temperature drop material to the temperature rise material is set so that within a temperature range of -40°C to +200°C, the absolute value of the change rate of the resistivity of the conductive material is less than or equal to 0.01; and curing the flexible substrate slurry to form the pressure sensitive layer. The prepared pressure sensitive layer has a wide applicable temperature range.

In a fourth aspect, the present application provides a battery cell, the battery cell including a housing and any one of the pressure sensors described above, wherein the pressure sensor is arranged inside the housing. It is possible to acquire the internal information of the battery, and the acquired data is more accurate.

In a fifth aspect, the present application provides an electrical device including the battery cell described above. It is possible to acquire the internal information of the battery, and the acquired data is more accurate.

The above description is only an overview of the technical solution of the present application. In order to better understand the technical means of the present application and thus implement them according to the contents of the specification, and in order to make the aforementioned and other objectives, features, and advantages of the present application more obvious and understandable, detailed description of the present application will be made specifically below.

### BRIEF DESCRIPTION OF DRAWINGS

In order to illustrate the technical solutions in the embodiments of the present application more clearly, the drawings to be used in description of the embodiments will be briefly introduced below. Obviously, the drawings described below are only some embodiments of the present application. For those of ordinary skill in the art, other drawings can also be obtained based on these drawings without any creative effort, in which:
FIG. 1 is a schematic structural sectional view of a pressure sensor according to one or more embodiments of the present application;
FIG. 2 is a schematic structural sectional view of a pressure sensor in different pressure states according to one or more embodiments of the present application;
FIG. 3a is an arrangement design diagram of a protrusion structure of a pressure sensor sensitive layer according to one or more embodiments of the present application;
FIG. 3b is a schematic arrangement diagram of a protrusion structure of a sensitive layer on a pressure sensor sample according to one or more embodiments of the present application;
FIG. 4 is a schematic structural plan view of a pressure sensor according to one or more embodiments of the present application;
FIG. 5 is a schematic structural exploded view of a battery according to one or more embodiments;
FIG. 6 is a schematic structural exploded view of a battery cell according to one or more embodiments;
FIG. 7 is a schematic structural view of a vehicle according to one or more embodiments; and
FIG. 8 is a schematic graph showing curves of resistance change rate as a function of temperature according to examples and comparative examples.

In the drawings:
1000 vehicle; 300 motor; 200 controller; 100 battery; 10 box body; 11 first part; 12 second part; 20 battery cell; 21 end cover; 21a electrode terminal; 22 shell; 23 electrode assembly;
400 pressure sensor; 40 electrode layer; 42 sensitive layer; 420 base layer; 422 protrusion structure; 4221 protrusion; 4222 protrusion; 4223 protrusion; 401 first electrode; 402 second electrode; 403 electrode substrate; 44 corrosion-resistant protective layer; 46 insulating layer; 48 sensitive layer adhesive; 49 insulating layer adhesive.

### DETAILED DESCRIPTION

The technical solutions in the embodiments of the present application will be clearly and completely described below with reference to the drawings of the embodiments of the present application. Apparently, the embodiments described are merely some rather than all of the embodiments of the present application. All the other embodiments obtained by a person of ordinary skill in the art based on the embodiments of the present application without any creative effort shall fall within the protection scope of the present application.

Unless otherwise defined, all technical and scientific terms used herein have the same meanings as those commonly understood by those skilled in the art to which the present application pertains to. The terms used herein are for the purpose of describing specific embodiments only, and are not intended to limit the present application. The terms "including" and "having" and any variations thereof in the specification and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary-secondary relation of the technical features indicated. In the description of the embodiments of the present application, the meaning of "a plurality of" is two or more (including two), unless otherwise explicitly and specifically defined. Similarly, "a plurality of groups" means two or more groups (including two groups), and "a plurality of sheets" means two or more sheets (including two sheets).

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein usually indicates an "or" relation between associated objects.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the aforementioned terms in the embodiments of the present application can be understood according to specific situations.

Amounts, ratios, and other numerical values are presented herein in the format of a range. It should be understood that such a format of a range is for convenience and brevity and should be construed flexibly to include not only the numerical values expressly specified as limits of the range, but also all individual values or sub-ranges encompassed within the range, as if each value and sub-range were expressly specified.

With the widespread application of electrochemical devices (e.g., lithium-ion batteries), people have higher and higher requirements on their performance, especially the safety, stability, capacity, etc., of the batteries, and expect the batteries to have good comprehensive performance in all aspects. Lithium battery is a complex system in which chemical energy, thermal energy, and electrical energy are highly coupled in (electro)chemical reactions. Real-time learning of the internal working status of the battery is the key to the development and design of new batteries and their efficient and safe operation. At the micro level, the reactions of delithiation and lithiation in the process of charging and discharging of lithium battery cause the electrode material to expand, and the internal stress of the battery increases, which easily leads to phenomena such as electrode delamination and SEI film thickness increase. The research shows that the expansion of graphite electrode can reach 10%, while that of graphite-silicon composite electrode can reach 280%. Under long-term cycle, it is difficult to deintercalate lithium ions due to the change of battery potential, and the internal electrode sheets will expand irreversibly, accompanied by problems such as electrolyte solution consumption, capacity reduction, and lithium dendrite, which lead to the degraded performance and shortened life of batteries. At the macro level, the expansion behavior of the multi-layer wound electrode sheets causes the volume expansion of the battery core, and the squeeze of the battery core with the battery housing causes the battery to deform. Under the effect of synergistic mechanical-thermal coupling, the internal and external stresses and heating behavior of the battery will change greatly, and the uncontrollable factors will increase with the usage time. The expansion behavior of the electrode can reflect the evolution of the internal structure and contains rich information. Acquiring information on the expansion behavior of the battery is of great significance for comprehensive and profound understanding of the operating mode of lithium batteries, optimizing battery material selection, monitoring battery energy conversion status, deeper understanding of the internal operating mechanism of the battery, and establishing a more accurate digital twin model of the battery core, and can provide important information for the battery management system (BMS) and further improve the safety, efficiency, and stability of lithium batteries during the operation stage.

In order to acquire internal information of the battery to a greater extent and with greater fidelity, embedded sensors can be used and are embed inside the battery to measure the temperature, stress, and the like. However, the temperature causes a huge interference with the measurements by a pressure sensor. Achieving temperature suppression is the key to determining whether the sensor can be applied in practice, especially for the complex temperature-changing application environment inside lithium batteries. There is a severe lack of development and design of high-performance embedded sensors.

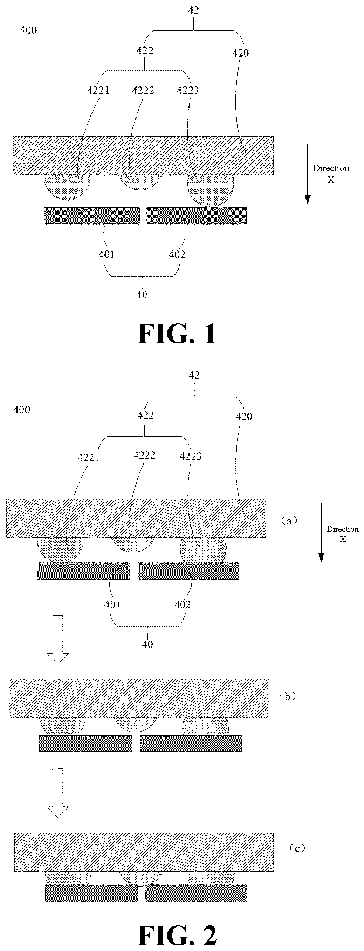

To solve the technical problems mentioned above, an embodiment of the present application provides a pressure sensor. Refer to FIG. 1, which is a schematic structural sectional view of a pressure sensor according to one or more embodiments of the present application. The pressure sensor 400 includes an electrode layer 40 and a sensitive layer 42.

Among them, the pressure sensor 400 is an element that outputs an applied pressure in the form of an electrical signal. The pressure sensor 400 may be a resistive sensor, which utilizes resistance changes to convert the measured pressure into an electrical signal that has a particular relationship with the pressure for output.

The pressure sensor 400 may be a thin film sensor. The thin film sensor can be carried by a metal material, a semiconductor material, a high molecular polymer, and the like, to manufacture a temperature sensor, a pressure sensor, a strain sensor, and other sensors, which can be embedded inside a battery to measure temperature and stress. It can realize in-situ detection of internal electrode expansion pressure signal and temperature under various operating conditions of power batteries, provide key data for the construction of accurate battery numerical models and battery management systems, and provide an important means for the industrial application of a new generation of safe and efficient lithium batteries.

Specifically, the electrode layer 40 is configured to acquire the electrical signal change of the sensitive layer 42, and is in contact with the sensitive layer 42 to form a conductive network to convert the pressure signal into an electrical signal. The sensitive layer 42 is configured to form a contact resistance with the electrode layer 40, so that the pressure sensor 400 acquires the pressure received based on the contact resistance between the sensitive layer 42 and the electrode layer 40. That is, it may be a bulk resistive pressure sensor, which mainly relies on the deformation of the sensitive layer under the action of external force to cause the internal conductive network to break or reconstruct and cause a change in resistance, thereby reflecting the magnitude of the applied external force.

In some embodiments of the present application, the electrode layer 40 includes a first electrode 401 and a second electrode 402 arranged in an interdigitated manner. An interdigitated electrode is an electrode having a periodic pattern in a plane, such as a finger or a comb. The first electrode 401 and the second electrode 402 are located on the same side of the sensitive layer 42, that is, the first electrode 401 and the second electrode 402 are coplanar electrodes. Due to the narrow space inside the battery, if the sensor is too thick, when the sensor is placed inside the battery, stress concentration at a single point may cause problems such as damage to and lithium deposition of the battery electrode material. In this embodiment, the coplanar electrodes based on interdigital electrodes are used, which can effectively reduce the thickness of the sensor without affecting the deformation ability of the sensitive layer under pressure, thereby obtaining sensitive resistance change acquisition capability.

In some embodiments of the present application, the material of the sensitive layer 42 includes a flexible substrate and conductive particles dispersed in the flexible substrate.

The flexible substrate is used to achieve deformation of the sensitive layer 42 after being subjected to pressure, and recovery after the pressure is released. The conductive particles are used to form a conductive network after contacting with the electrode layer 40. The selection of the flexible substrate largely determines the mechanical properties of the pressure sensor, and is related to the deformation and recovery of the pressure sensor under pressure. The selection of the conductive particles is related to the magnitude of the contact resistance, and affects the sensitivity, accuracy, and measurement range of the pressure sensor. Therefore, the material of the sensitive layer is the key to determining the mechanical and electrical properties of the sensitive layer. When selecting the material for the sensitive layer, it is necessary to consider the application environment of the sensor is inside the lithium battery. For example, the characteristic of the necessity to operate for a long time (longer than 3 months) and multiple cycles (greater than 100 times) under high pressure (greater than 1.2 MPa) poses high requirements on the mechanical properties of the sensor. Furthermore, the temperature causes a huge interference with the measurements by a pressure sensor, especially in the complex temperature-changing application environment inside lithium batteries. At the same time, after the sensor is embedded in the lithium battery, it needs to go through subsequent processes such as drying, liquid injection, and aging at a temperature up to 105°C. Therefore, the sensor needs to have the ability to withstand higher temperatures without being damaged while having a suppressed temperature drift. However, the current common sensitive layer materials are incompressible, and have disadvantages such as response speed being limited by the material rebound speed, severe creep, great thickness, and large temperature drift.

To solve the above technical problems, the present application provides a conductive material for a pressure sensitive layer, including a flexible substrate and conductive particles dispersed in the flexible substrate, wherein the conductive particles comprise a temperature rise material and a temperature drop material, the temperature rise material is a material having a resistivity that increases as the temperature rises, the temperature drop material is a material having a resistivity that decreases as the temperature rises, and the ratio of the temperature drop material to the temperature rise material is set so that within a temperature range of -40°C to +200°C, the absolute value of the change rate of the resistivity of the conductive material is less than or equal to 0.01.

In this embodiment, the change rate of the resistivity is based on the resistivity of the conductive particles at 25°C as a benchmark. The difference between the resistivity at different temperatures and the benchmark resistivity is calculated, and then the ratio of the difference to the benchmark resistivity is calculated. For example, the change rate of the resistivity from 25°C to 50°C = (resistivity_{50°C}-resistivitY_{25°C}) / resistivity_{25°C}.

Among them, resistivity is a physical quantity used to express the resistance characteristics of various materials. The resistance of a conductor made of a particular material with a length of 1 m and a cross-sectional area of 1 m² is numerically equal to the resistivity of this material. Resistivity reflects the property of a material in resisting electric current. It is not only related to the type of material, but also affected by external factors such as the temperature. That is, when the temperature changes, the resistivity of the material also changes. The resistivity of some materials increases as the temperature rises, while the resistivity of some materials decreases as the temperature rises. In other words, when the length and cross-sectional area of the material remain unchanged, the resistance value of the temperature rise material increases as the temperature rises, and the resistance value of the temperature drop material decreases as the temperature rises.

In this embodiment, by mixing the temperature rise material and the temperature drop material, the resistance increased by the temperature rise material is balanced by the resistance decreased by the temperature drop material, or the resistance decreased by the temperature drop material is balanced by the resistance increased by the temperature rise material, so that the resistance of a mixed material does not change significantly when the temperature changes, that is, the resistivity of the mixed material is substantially not affected by the temperature, such that the detection sensitivity of a sensor at different temperatures is improved, thereby reducing detection errors caused by a temperature change.

In some embodiments of the present application, the ratio of the temperature drop material to the temperature rise material is set so that within the temperature range of +25°C to +80°C, the absolute value of the change rate of the resistivity of the conductive material is less than or equal to 0.008. For example, the change rate of the resistivity of the conductive material may be 0.001, 0.0015, 0.002, 0.0025, 0.003, 0.004, 0.005, 0.0055, 0.006, 0.007, 0.008, and so forth. The closer the change rate of the resistivity of the conductive material is to zero, the better, so that the resistivity of the conductive material is insensitive to the temperature, thereby reducing the errors of the acquired resistance caused by temperature change. Through such setting, the pressure sensor can also work at extreme temperatures such as in a range of -40°C to +200°C with a small detection error; and at normal temperatures of + 25°C to +80°C, the change rate of the resistivity is smaller and the detection sensitivity is higher.

In some embodiments of the present application, the ratio of the temperature drop material to the temperature rise material is set so that within the temperature range of -40°C to +200°C, the absolute value of the change rate of the resistance of the conductive material is less than or equal to 0.01. Optionally, the ratio of the temperature drop material to the temperature rise material is set so that within the temperature range of +25°C to +80°C, the absolute value of the change rate of the resistance of the conductive material is less than or equal to 0.008. For example, it may be 0.001, 0.0015, 0.002, 0.0025, 0.003, 0.004, 0.0045, 0.005, 0.0055, 0.006, 0.007, 0.008, and so forth. The change rate of the resistance is based on the resistance of the conductive particles at 25°C as a benchmark. The difference between the resistance at different temperatures and the benchmark resistance is calculated, and then the ratio of the difference to the benchmark resistance is calculated. For example, the change rate of the resistivity from 25°C to 50°C = (resistivity _{50°C}- resistivity _{25°C}) / resistivity _{25°C}.

Among them, from the perspective of the material properties of the conductive material, the present application regulates the change rate of its resistivity to be relatively small; further, from the perspective of the resistance of the sensor, the present application aims to control the contact resistances between the sensitive layer 42 and the electrode layer 40 measured at different temperatures under the same pressure conditions to be substantially the same. In other words, when the pressure remains unchanged, the contact area between the sensitive layer 42 and the electrode layer 40 remains unchanged, and the contact resistance therebetween is not affected by temperature changes.

In an implementation, a temperature coefficient may be used to represent the rate at which the physical property of a material changes as the temperature changes. Specifically, the temperature coefficient of resistance (TCR) can be used to represent the relative change in the resistance value of a material when the temperature changes by 1 degree Celsius. Specifically, TCR=(R₂-R₁)/(R₁*(T₂-T₁))=(R₂-R₁)/(R₁*ΔT), wherein R₁ is the resistance value (Ω) at temperature T1, and R₂ is the resistance value (Ω) at temperature T2. The larger the temperature coefficient, the more its resistance changes (increases or decreases) with the same temperature change.

The temperature coefficient of resistance here may be a positive temperature coefficient, a negative temperature coefficient, or a zero coefficient. Materials with a positive temperature coefficient have the characteristic that their resistivity increases as the temperature rises; materials with a negative temperature coefficient have a resistivity that decreases as the temperature drops; and a coefficient of 0 means that its resistivity substantially does not change as the temperature changes. In the solutions of the present application, it is intended to regulate the ratio of the temperature rise material to the temperature drop material so that the temperature coefficient of the conductive material is 0.

In some embodiments of the present application, within the temperature range of -40°C to +200°C, the ratio of the absolute values of the temperature coefficient of resistance of the temperature rise material to that of the temperature drop material is in a range of 30:1-1:30, and optionally 15:1-1:10. For example, it may be 30:1, 20:1, 10:1, 5:1, 1:1, 1:5, 1:8, or 1:10. Specifically, materials with smaller temperature coefficient values may be selected, that is, materials that are insensitive to temperature may be selected. Preferably, the temperature coefficient value of the selected temperature rise material is close to the temperature coefficient value of the selected temperature drop material; that is, when the sizes of the materials are similar, the resistance increased by the same amount of temperature rise material is similar to the resistance reduced by the temperature drop material. By setting the ratio of the absolute values of the temperature coefficient of resistance of the temperature rise material to the that of the temperature drop material to 30:1-1:30, the ratio of the content of the temperature rise material to the content of the temperature drop material can be regulated within a preferable range so that the difference in content between the two is not too large, so as to avoid non-uniform mixing due to the large difference in content between the two. When the ratio of the absolute values of the temperature coefficient of resistance of the temperature rise material to that of the temperature drop material is in a range of 15:1-1:10, the absolute values of the temperature coefficient of resistances of the temperature rise material and the temperature drop material can be closer to each other, making the difference in content between the two smaller and the mixing more uniform. When the ratio of the absolute values of the temperature coefficient of resistance of the temperature rise material to that of the temperature drop material is greater than 30:1, or less than 1:30, the difference in absolute value between the temperature coefficient of resistances of the temperature rise material and the temperature drop material is large, resulting in a large difference in ratio between the two, which causes non-uniform mixing.

In some embodiments of the present application, within the temperature range of -40°C to +200°C, the absolute value of the ratio of the change rate of the resistivity of the temperature rise material to that of the temperature drop material is in a range of 25:1-1:25, and optionally 10:1-1:5. For example, it may be 25:1, 20:1, 10:1, 5:1, 1:1, 1:2, 1:3, 1:5, and so forth. Specifically, materials with smaller change of the resistivity may be selected, that is, materials that are insensitive to temperature may be selected. Preferably, the change rate of the resistivity of the selected temperature rise material is close to that of the selected temperature drop material; that is, when the material sizes are similar, the resistance increased by the same amount of temperature rise material is similar to the resistance reduced by the same amount of temperature drop material. By setting the absolute value of the ratio of the change rate of the resistivity of the temperature rise material to that of the resistivity of the temperature drop material to 25:1-1:25, the ratio of the content of the temperature rise material to the content of the temperature drop material can be regulated within a preferable range so that the difference in content between the two is not too large, so as to avoid non-uniform mixing due to the large difference in content between the two. When the absolute value of the ratio of the change rate of the resistivity of the temperature rise material to that of the temperature drop material is in a range of 10:1-1:5, the absolute values of the change rates of the resistivity of the temperature rise material and the temperature drop material can be made closer to each other, making the difference in content between the two smaller and the mixing more uniform. When the ratio of the absolute values of the temperature coefficient of resistance of the temperature rise material to that of the temperature drop material is greater than 10:1, or less than 1: 5, the difference in absolute value between the change rates of the resistivity of the temperature rise material and the temperature drop material is large, resulting in a large difference in ratio between the two, which causes non-uniform mixing.

In some embodiments of the present application, the mass ratio of the temperature rise material to the temperature drop material is in a range of 15:1-1:20, and optionally in a range of 12:1-1:8. For example, it may be 15:1, 13:1, 10:1, 5:1, 1:1, 1:3, 1:5, 1:8 and so forth. By controlling the mass ratio within this range, the difference in content between the two will not be too large, so as to avoid non-uniform mixing due to the large difference in content between the two. When the mass ratio of the temperature rise material to the temperature drop material is in a range of 12:1-1:8, the difference in content between the temperature rise material and the temperature drop material can be made smaller and the mixing more uniform. When the ratio of the mass content of the temperature rise material to that of the temperature drop material is greater than 15:1, or less than 1:8, the difference in content between the temperature rise material and the temperature drop material is large, resulting in non-uniform mixing.

In some embodiments of the present application, the conductivity of the temperature rise material is greater than 1 S·m⁻¹; and/or the conductivity of the temperature drop material is greater than 1 S·m⁻¹; and/or the conductivity of the conductive material is greater than 1 S·m⁻¹. The conductivity of the conductive material may be between the conductivity of the temperature rise material and that of the temperature drop material; it may alternatively be greater than the conductivity of the temperature rise material and that of the temperature drop material; or it may be less than the conductivity of the temperature rise material and that of the temperature drop material. By controlling the conductivity and selecting materials with relatively high conductivity, the conductivity of the conductive material can be improved, so that the sensor is enabled to provide more sensitive detection.

In some embodiments of the present application, the temperature rise material includes one or more of graphite, gold powder, silver powder, nickel powder, zinc-chromium alloy, nickel-copper alloy, and the like. By selecting these materials, the sensor is enabled to provide more sensitive detection.

In some embodiments of the present application, the temperature drop material includes one or more of carbon nanotubes, Ketjen black, graphene, carbon black, and ceramic materials with metal oxides of manganese, cobalt, nickel, and copper as main materials. By selecting these materials, the sensor is enabled to provide more sensitive detection.

When the temperature rise material and the temperature drop material include a plurality of materials, the mass ratio of the temperature rise material to the temperature drop material is the ratio of the total mass of all the temperature rise materials to that of all the temperature drop materials.

In some embodiments of the present application, the conductive particles include graphite particles and carbon nanotube particles, and the mass ratio of the graphite particles to the carbon nanotube particles is in a range of 1:1-1:20, and optionally 1:9-1:15. For example, it may be 1:1, 1:3, 1:5, 1:7, 1:9, 1:11, 1:12, 1:15, 1:18, 1:20, and so forth. By using a mixture of graphite particles and carbon nanotube particles, the material is relatively stable and has high conductivity, and the conductive particles can be made into nanometer scale, making them easier to be dispersed and mixed more uniformly, thereby making the signal feedback more sensitive and improving the sensitivity. When the mass ratio of the graphite particles to the carbon nanotube particles is in a range of 1:9-1:15, the difference in content between the graphite particles and the carbon nanotube particles can be made smaller and the mixing more uniform. When the mass content ratio of the graphite particles to the carbon nanotube particles is greater than 1:1, or less than 1:20, the difference in content between the graphite particles and the carbon nanotube particles is large, resulting in non-uniform mixing.

In some embodiments of the present application, the carbon nanotube particles include multi-walled carbon nanotube particles, and the multi-walled carbon nanotube particles have an outer diameter in a range of 6-13 nm and a length in a range of 2.5-20 µm. The graphite particles have a particle size Dv50 in a range of 7-10 µm. By selecting carbon nanotubes and graphite of this size, the conductive performance of the material is better and the detection is more sensitive.

In some embodiments of the present application, the flexible substrate includes one or more of thermoplastic polyurethane, polyvinyl alcohol, chloroprene rubber, nitrile rubber, styrene-butadiene block copolymer, and polyacrylic acid, and optionally is an aliphatic thermoplastic polyurethane. By selecting polyurethane, compared with base materials such as Polydimethylsiloxane (PDMS) and aliphatic aromatic random copolyester (Eco-flex), polyurethane has higher durability and wear resistance.

In some embodiments of the present application, the mass ratio of the flexible substrate to the conductive particles is in a range of 15:1-5:1, and optionally 12:1-8:1. For example, it may be 15:1, 12:1, 10:1, 8:1, 6:1, 5:1, and so forth. If the content of the flexible substrate is too low, the elasticity of the material will be insufficient, resulting in a smaller measurement range of the sensor; and if the content of the flexible substrate is too high, the support of the sensitive layer is insufficient, resulting in collapse, which reduces the detection accuracy. By setting the mass ratio of the flexible substrate to the conductive particles to 15:1-5:1, the elasticity and conductivity of the sensitive layer can be improved. By setting the mass ratio of the flexible substrate to the conductive particles to 12:1-8:1, the elasticity and conductivity of the sensitive layer can be further improved.

In the above implementations, by regulating the composition of the material of the sensitive layer, especially the composition of the conductive material, so that the conductive material is made insensitive to temperature, the usage temperature range of the sensor can be extended, the detection errors caused by temperature changes can be reduced, and the detection sensitivity can be improved.

Continue to refer to FIG. 1. In some embodiments of the present application, the sensitive layer 42 has a microstructure, specifically including a plurality of protrusion structures 422 of at least two different heights. The protrusion structures 422 are in contact with two electrodes of the electrode layer 40 that are not connected to each other, thereby constructing a conductive network and forming a contact resistance. Here, the height direction is along the direction from the base layer 420 to the electrode layer 40 (the direction X shown in the figure), and the height of the protrusion structures 422 can be measured by a scanning electron microscope. As the pressure received gradually increases, the contact area between the protrusion structures 422 and the electrodes gradually increases, and the contact resistance gradually decreases. The change in the contact area of the protrusion structures 422 is caused by the compression deformation of the protrusion structures 422 due to the pressure received and the support from the electrode layer 40.

Refer to FIG. 2. FIG. 2 is a schematic structural sectional view of a pressure sensor in different pressure states according to one or more embodiments of the present application. Among the figures, FIG. 2(a) is a schematic structural sectional view of the pressure sensor in a first pressure state according to one or more embodiments of the present application, FIG. 2(b) is a schematic structural sectional view of the pressure sensor in a second pressure state according to one or more embodiments of the present application, and FIG. 2(c) is a schematic structural sectional view of the pressure sensor in a third pressure state according to one or more embodiments of the present application. As the pressure increases further, the protrusion structure 422 that was not originally involved in the construction of the conductive network is in contact with the electrode and is incorporated into the conductive network, which is equivalent to connecting a new resistor in parallel to the original conductive network, thereby further reducing the overall resistance at both ends of the electrode to reflect the change in the pressure value.

In this implementation, protrusion structures 422 of three different heights are included, wherein the protrusion 4221 is a protrusion of a protrusion structure of a first height, the protrusion 4222 is a protrusion of a protrusion structure of a second height, and the protrusion 4223 is a protrusion of a protrusion structure of a third height. The height of the protrusion 4223 is greater than that of the protrusion 4221, and the height of the protrusion 4221 is greater than that of the protrusion 4222. As shown in FIG. 2(a), in the first pressure state, the protrusion 4221 and the protrusion 4223 are in contact with the first electrode 401 and the second electrode 402 of the electrode layer 40, respectively, forming a conductive network. At this time, the contact area between the protrusions and the electrodes is small. As the pressure increases, as shown in FIG. 2(b), in the second pressure (the second pressure is greater than the first pressure) state, the contact area between the protrusions 4221 and 4223 and the electrodes increases. As the pressure continues to increase, as shown in FIG. 2(c), in the third pressure (the third pressure is greater than the second pressure) state, the protrusion 4222 that was originally not in contact with the electrode starts to contact the electrode, and the protrusion 4222 is in contact with both the first electrode 401 and the second electrode 402, forming a new conductive network. From state (a) to state (c) in FIG. 2, the contact area between the protrusion 4221 and the first electrode 401 gradually increases; from state (a) to state (b) in FIG. 2, the contact area between the protrusion 4223 and the second electrode 402 gradually increases; but from state (b) to state (c) in FIG. 2, the contact area between the protrusion 4223 and the second electrode 402 does not increase significantly. This is because after being compressed to a certain extent, the protrusion 422 reaches its deformation limit and will no longer change significantly. That is, when the compression amount of the protrusion structure is within a particular range (i.e., the pressure sensitive range), the contact area changes relatively significantly, thereby enabling effective detection of the pressure received. However, beyond this range, the contact area does not change significantly or does not change, and thus the pressure received cannot be effectively detected or the sensitivity deteriorates. In this embodiment, by setting protrusion structures of two different heights, the pressure sensitive range of the protrusion structure of each height is set differently, which enables the pressure sensor to be suitable for detection environments at various pressures, thereby effectively obtaining the measurement range and sensitivity of the pressure sensor. For example, from state (b) to state (c) in FIG. 2, the contact area between the protrusion 4223 and the second electrode 402 does not increase significantly, but at this time, the protrusion 4222 begins to contact the electrode to form a new conductive network, that is, a new resistor is incorporated, and the resistance change continues to be achieved in a more sensitive manner, thereby improving the measurement range and sensitivity.

In some embodiments of the present application, at least a portion of the protrusion structure 422 of a relatively lower height is spaced apart from the electrode layer 40 along the height direction of the protrusion structure 422, and contacts the electrode layer 40 after the pressure received is greater than a predetermined threshold. At the same time, at least a portion of the protrusion structure 422 of the largest height is arranged to keep in contact with the electrode layer 40. Through such setting, the sharp drop in resistance can be effectively delayed, thereby improving the measurement range of the sensor. The protrusion structure of the largest height can be used to provide support for the sensitive layer, which can effectively reduce the adverse effects caused by the collapse of the sensitive layer. Specifically, if the sensitive layer collapses, it will cause abnormal contact between the protrusion structure and the electrode layer, which in turn causes the change in contact area of the protrusion structure to be inconsistent with the design expectations, affecting the measurement accuracy. At the same time, after the protrusion structure of the relative larger height is compressed to a certain extent, the protrusion structure of the relatively lower height can be caused to contact the electrode layer, so that the pressure sensitive range of the protrusion structure of the relatively larger height and the pressure sensitive range of the protrusion structure of the relatively lower height can be effectively staggered, thereby further increasing the measurement range and sensitivity.

In some embodiments of the present application, the protrusion of the protrusion structure 422 is in a shape with a large bottom and a small top, for example, it may be a cone or a frustum that gradually tapers from the bottom end to the top end; or it may be a spherical segment varying in an arc shape. Through such setting, when the protrusion structure is compressed under pressure, its contact area with the electrode layer gradually changes, which can effectively improve the sensitivity of the contact area of the protrusion structure to pressure. When the higher-level microstructure reaches the compression limit under pressure, the lower-level microstructure contacts the electrode in supplement. Through multi level and multi pressure for the microstructures, the sensitivity of the sensor within a large measurement range can be greatly improved, and pressure changes can be better distinguished.

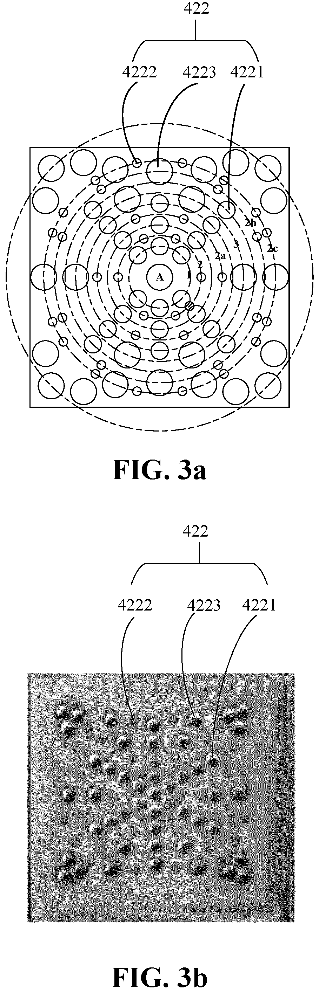

Refer to FIGS. 3a and 3b. FIG. 3a is an arrangement design diagram of protrusion structures of a sensitive layer of a pressure sensor according to one or more embodiments of the present application; and FIG. 3b is a schematic arrangement diagram of protrusion structures of a sensitive layer on a pressure sensor sample according to one or more embodiments of the present application. In some embodiments of the present application, the protrusions of the protrusion structure 422 of the same height are arranged at intervals on an annular reference line centered at a preset reference point. The spacing may be equal or non-equal. As shown in FIG. 3a, three protrusion structures 422 of different heights are included, wherein a protrusion 4221 is a protrusion of a protrusion structure of a first height, a protrusion 4222 is a protrusion of a protrusion structure of a second height, and a protrusion 4223 is a protrusion of a protrusion structure of a third height. The height of the protrusion 4223 is greater than that of the protrusion 4221, and the height of the protrusion 4221 is greater than that of the protrusion 4222. Multiple protrusions 4221 are arranged at intervals on an annular reference line 1 centered on a preset reference point A; multiple protrusions 4222 are arranged at intervals on an annular reference line 2 centered at the preset reference point A; and multiple protrusions 4223 are arranged at intervals on an annular reference line 3 centered at the preset reference point A. By arranging the protrusions of the protrusion structure of the same height on the annular reference line, the annular reference line can be used as a unit for design considerations during the design process, thereby reducing the complexity of the arrangement of the protrusion structures.

As shown in FIG. 3a, multiple protrusions 4221 are arranged at intervals on an annular reference line 1 centered at the preset reference point A; multiple protrusions 4222 are arranged at intervals on an annular reference line 2 centered at the preset reference point A; and multiple protrusions 4223 are arranged at intervals on an annular reference line 3 centered at the preset reference point A. By arranging the protrusions of the protrusion structure of the same height on the annular reference line, the annular reference line can be used as a unit for design considerations during the design process, thereby reducing the complexity of the arrangement of the protrusion structures.

In some embodiments of the present application, further provided is a method for preparing a pressure sensitive layer, specifically including: providing a flexible substrate slurry; adding conductive particles to the flexible substrate slurry, wherein the conductive particles comprise a temperature rise material and a temperature drop material, the ratio of the temperature drop material to the temperature rise material is set so that within a temperature range of -40°C to +200°C, the absolute value of the change rate of the resistivity of the conductive material is less than or equal to 0.01; and curing the flexible substrate slurry to form the pressure sensitive layer.

Here, the sensitive layer can be formed by using a mold for reverse molding. The mold used for reverse molding of the sensitive layer may be composed of an acrylic plate outer layer and a PDMS (polydimethylsiloxane) inner layer, wherein PDMS is the main body of the mold, and the acrylic outer frame is used to carry PDMS. The PDMS solution was mixed with the curing agent in a mass ratio of 10:1. The mixture was placed in a vacuum box for 30 min to remove all bubbles and then heated at 80°C for 1 h to fully cross-link and cure it. After molding, the PDMS mold was microstructured and grooved using infrared/ultraviolet lasers. Specifically, an infrared laser can be used to process corresponding pits on the PDMS surface based on the designed structural pattern. The depth and diameter of the microstructure can be adjusted by changing the processing power, number of dots, and processing frequency of the laser. The sensitive layer solution is coated in the processed grooves by scraping to achieve reverse molding preparation.

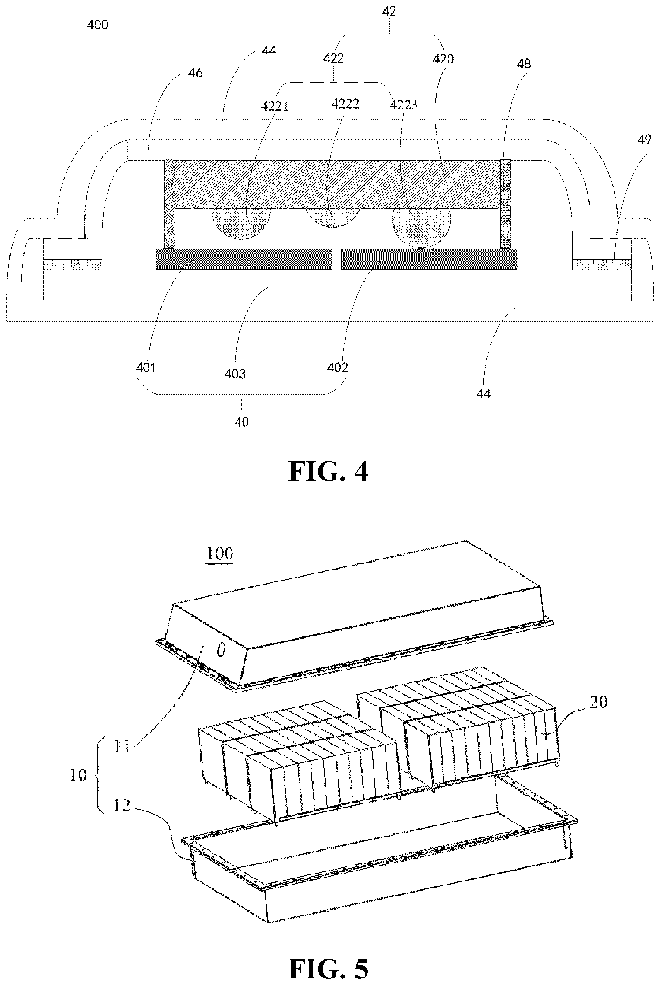

Refer to FIG. 4. FIG. 4 is a schematic structural plan view of a pressure sensor according to one or more embodiments of the present application. The pressure sensor 400 further includes a corrosion-resistant protective layer 44 configured to resist the major corrosion by the electrolyte solution inside the lithium battery; and a sensitive layer 42 configured to sense external forces. The sensitive layer 42 includes a base layer 420 and at least two protrusion structures 422 protruding from the base layer 420 at different heights. The electrode layer 40 and the sensitive layer 42 are encapsulated by a sensitive layer adhesive 48 and are combined to form a key circuit that responds to pressure. The electrode layer 40 includes an electrode substrate 403, and a first electrode 401 and a second electrode 402 arranged in an interdigitated manner. The electrode substrate 403 is configured to carry a membrane structure such as the sensitive layer 42. An isolation layer 46 is located between the sensitive layer 42 and the corrosion-resistant protective layer 44, and is configured to protect the sensitive layer 42 from being affected or damaged during the manufacturing process of the corrosion-resistant protective layer 44. The insulating layer 46 is connected to the electrode substrate 403 via an insulating layer adhesive 49. The pressure sensor 400 is a piezoresistive sensor based primarily on the change of the contact resistance between the microstructure of the sensitive layer and the coplanar interdigital electrodes.

In the above implementations, the sensitive function is mainly realized by relying on the change of the contact resistance between the conductive sensitive layer and the electrode with the pressure. Specific microstructures in contact with the electrode are manufactured on the sensitive layer, such as pyramid type, dome type, etc., which can change the contact characteristics between the sensitive layer and the electrode, thereby achieving the improvement or regulation of the piezoresistive characteristics of the sensor. The introduction of microstructures of specific shapes can improve the sensitivity, measurement range, and other performance indicators of the pressure sensor to a certain extent.

In some embodiments of the present application, the pressure sensor can be configured to detect the internal pressure of the battery. That is, the present application provides a battery cell, the battery cell including a housing and a pressure sensor of any of the embodiments described above, wherein the pressure sensor is arranged inside the housing.

The embodiments of the present application can be applied to batteries of various systems, including but not limited to lithium batteries, sodium batteries, etc. The shape of the battery includes, but is not limited to, a cylinder, a square, or any other shape.

In some implementations, the battery 100 of the present application includes a box body 10 and a battery cell 20, and the battery cell 20 is accommodated in the box body 10. Refer to FIG. 5. FIG. 5 is a schematic structural exploded view of a battery according to one or more embodiments. The box body 10 is configured to provide an accommodating space for the battery cell 20, and the box body 10 may be of a variety of structures. In some embodiments, the box body 10 may include a first part 11 and a second part 12, the first part 11 and the second part 12 are covered by each other, and the first part 11 and the second part 12 together define the accommodating space for accommodating the battery cell 20. The second part 12 may be of a hollow structure with an opening at one end, and the first part 11 may be of a plate-like structure, wherein the first part 11 covers the opening side of the second part 12 so that the first part 11 and the second part 12 together define the accommodation space. The first part 11 and the second part 12 may each be of a hollow structure with an opening at one end, wherein the opening side of the first part 11 covers the opening side of the second part 12. Of course, the box body 10 formed by the first part 11 and the second part 12 may be of a variety of shapes, such as a cylinder and a rectangular solid.

In the battery 100, there may be a plurality of battery cells 20, and the plurality of battery cells 20 may be connected in series or in parallel or in parallel-series, wherein the parallel-series connection means that the plurality of battery cells 20 are connected in both series and parallel. The plurality of battery cells 20 may be directly connected together in series or in parallel or in parallel-series, and then the whole composed of the plurality of battery cells 20 may be accommodated in the box body 10. Of course, the battery 100 may also be in the form of a battery module first formed by the plurality of battery cells 20 being connected in series or in parallel or in parallel-series, then the plurality of battery modules may be connected in series or in parallel or in parallel-series to form a whole, and accommodated in the box body 10. The battery 100 may further include other structures, for example, the battery 100 may further include a bus component for achieving electrical connection between the plurality of battery cells 20.

Each battery cell 20 may be a secondary battery, such as a lithium-ion battery, a sodium-ion battery, a magnesium-ion battery, and an aluminum-ion battery, but is not limited thereto. The battery cell 20 may be of a cylinder, a flat body shape, a rectangular solid, or other shapes.

The battery manufacturing methods include laminating and winding, that is, the batteries are classified into two types: laminated batteries and wound batteries. The laminated battery has uniform current collection effect, small internal resistance of the battery, and high specific power, but it requires extremely high mold precision, high equipment investment, and relatively complexed process, resulting in low production efficiency. The wound battery is simple to manufacture, and the production and assembly processes thereof have general requirements on equipment precision, with high production efficiency and low cost. In terms of performance, the wound battery has excellent high and low temperature performance, charges very quickly, has an ultra-long life, a stable high output voltage, a robust structure, and strong shock resistance.

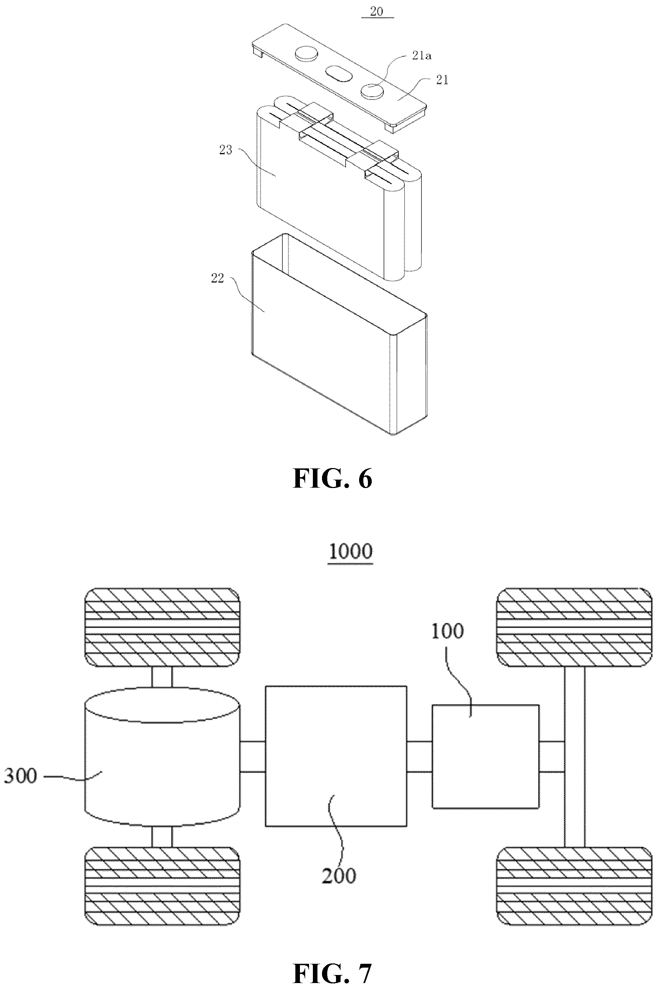

Refer to FIG. 6. FIG. 6 is a schematic structural exploded view of a battery cell 20 according to one or more embodiments. The battery cell 20 is a basic unit for realizing mutual conversion between chemical energy and electrical energy in the battery. The battery cell 20 includes an end cover 21, a shell 22, an electrode assembly 23, and other functional components.

The end cover 21 is a component that covers an opening of the shell 22 to isolate the internal environment of the battery cell 20 from the external environment. Without limitation, the shape of the end cover 21 may be adaptive to the shape of the shell 22 so as to be matched with the shell 22. Optionally, the end cover 21 may be made of a material (such as an aluminum alloy) with a certain hardness and strength, so that the end cover 21 is not easy to be deformed when being pressed and collided, the battery cell 20 can have a higher structural strength, and the safety performance can also be improved. Functional components such as electrode terminals 21a may be arranged on the end cover 21. The electrode terminals 21a can be configured to electrically connected to the electrode assembly 23 for use in outputting or inputting electrical energy from or to the battery cell 20. In some embodiments, the end cover 21 may be further provided with a pressure relief mechanism configured to relieve internal pressure when the internal pressure or temperature of the battery cell 20 reaches a threshold. The end cover 21 may be made of a variety of materials, including, without limitation, copper, iron, aluminum, stainless steel, an aluminum alloy, plastic, and the like. In some embodiments, an insulating member may be further arranged on an inner side of the end cover 21 and may be used for isolating an electrical connection component in the shell 22 from the end cover 21, thereby reducing the risk of short circuit. For example, the insulating member may be made of plastic, rubber, and the like.

The shell 23 is an assembly to be mated with the end cover 21 to form the internal environment of the battery cell 20. The formed internal environment can be used to accommodate the electrode assembly 22, an electrolytic solution, and other components. The shell 22 and the end cover 21 may be separate components, an opening may be formed in the shell 22, and at the opening, the opening is covered with the end cover 21 so as to form the internal environment of the battery cell 20. Without limitation, the end cover 21 and the shell 22 may also be integrated. Specifically, the end cover 21 and the shell 22 may form a common connection surface before other components enter the shell. When an interior of the shell 22 is required to be encapsulated, the shell 22 is covered with the end cover 21. The shell 22 may be of various shapes and sizes, such as a rectangular solid, a cylinder, and a hexagonal prism. Specifically, the shape of the shell 22 may be determined depending on the specific shape and size of the electrode assembly 23. The shell 22 may be made of a variety materials, including, without limitation, copper, iron, aluminum, stainless steel, an aluminum alloy, plastic, and the like.

The electrode assembly 23 is a component in which an electrochemical reaction occurs in the battery cell 20. One or more electrode assemblies 23 may be included within the shell 22. The electrode assembly 23 is mainly formed by winding or laminating a cathode sheet and an anode sheet, and a separator is usually provided between the cathode sheet and the anode sheet. The portions, with active materials, of the cathode sheet and the anode sheet constitute a main body part of the electrode assembly, and the portions, without the active materials, of the cathode sheet and the anode sheet respectively constitute tabs 23a. The cathode tab and the anode tab may be co-located at one end of the main body part or located at two ends of the main body part, respectively. In the charging and discharging process of the battery, the cathode active material and the anode active material react with the electrolyte solution, and the tabs 23a are connected to the electrode terminals to form a current loop.

The cathode electrode sheet generally includes a cathode current collector and a cathode film layer provided on the cathode current collector.

The cathode current collector may generally be a conventional metal foil or a composite current collector (a metal material may be provided on a high molecular substrate to form a composite current collector). As an example, the cathode current collector may be an aluminum foil.

The cathode film layer includes a cathode active material, an adhesive, a conductive agent, and other optional auxiliaries.

As an example, the cathode active material may include one or more of lithium transition metal oxide, lithium-containing phosphates of olivine structure and respective modified compounds thereof, transition metal oxide, polyanion compound, and Prussian blue analog. Examples of the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the lithium-comprising phosphate of olivine structure may include one or more of lithium iron phosphate, composites of lithium iron phosphate and carbon, lithium manganese phosphate, composites of lithium manganese phosphate and carbon, lithium iron manganese phosphate, composites of lithium iron manganese phosphate and carbon, and modified compounds thereof. The modified compounds of the aforementioned materials may be produced by modification through doping and/or surface coating of the materials. These materials are all commercially available.

As an example, the conductive agent may be one or more of superconducting carbon, acetylene black, carbon black, Ketjen black, carbon dot, carbon nanotubes, Super P (SP), graphene, and carbon nanofiber.

As an example, the adhesive may be one or more of styrene butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

As an example, other optional auxiliaries may include a thickener and dispersant (e.g., Carboxymethylcellulose Sodium (CMC-Na)) or PTC thermistor material.

The anode electrode sheet generally includes an anode current collector and an anode film layer provided on the anode current collector.

The anode current collector may be a conventional metal foil or a composite current collector (e.g., a metal material may be provided on a high molecular substrate to form a composite current collector). As an example, the anode current collector may be a copper foil.

The anode film layer includes an anode active material, an adhesive, a conductive agent, and other auxiliaries.

The anode active material may include one or more of a silicon-based material, a silicon-carbon material, a carbon material, and a selenium-based material. Specifically, the anode active material may include one or more of artificial graphite, natural graphite, hard carbon, soft carbon, a silicon-based material, and a selenium-based material. The silicon-based material may be selected from one or more of elemental silicon, a silicon oxide compound (e.g., silicon monoxide), a silicon-carbon composite, a silicon-nitrogen composite, and a silicon alloy. The selenium-based material may be selected from one or more of elemental selenium, a selenium oxygen compound, and a selenium alloy. These materials are all commercially available. In some embodiments of the present application, the design concept of activity density is also applicable to sodium batteries, or in other words, the type of battery is not limited. The present application does not limit the selection and combination of electrode materials. Different combinations of anode and cathode materials may have different active density control standards.

As an example, the conductive agent may be one or more of superconducting carbon, acetylene black, carbon black, Ketjen black, carbon dot, carbon nanotube, graphene, and carbon nanofiber.

As an example, the adhesive may be one or more of styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional auxiliaries may include a thickener and dispersant (e.g., Carboxymethylcellulose Sodium (CMC-Na)) or PTC thermistor material.

In an implementation, the cathode active material and the anode active material are mixed in proportion with the adhesive and the conductive agent to obtain cathode slurry and anode slurry, and then the cathode slurry and anode slurry are coated over the corresponding current collectors respectively, and dried after coating to obtain a cathode electrode sheet and an anode electrode sheet.

The battery cell further includes a separator and an electrolyte solution.

The separator is arranged between the cathode electrode sheet and the anode electrode sheet. As an insulating layer, it can effectively prevent the cathode electrode sheet and the anode electrode sheet from contacting each other and causing an internal short circuit, while allowing the electrolyte ions to pass smoothly. The performance of the separator determines the interface structure, internal resistance, etc., of the battery, and directly affects the mechanical strength and safety performance of the battery.

The specific type of the material of the separator is not limited, and the material that can be used for the separator of the battery as known in the art can be used and can be selected by those skilled in the art according to the requirements. As an example, the material of the separator may include one or more of polyolefin, fluoropolymer, cellulose, and glass fiber. The polyolefin may include, but is not limited to, one or more of polypropylene and polyethylene. These materials are all commercially available.

In some implementations, the separator includes a base film and a coating located on one side/both sides of the base film, and the coating includes a filler. The filler may include inorganic materials, polymer adhesives, and dispersants. The inorganic materials include one or more of boehmite and silica. The polymer adhesive material includes one or more of PVDF (polyvinylidene fluoride) and polystyrene-acrylate. The dispersant material includes polyvinyl alcohol and the like. By providing a coating over one side/both sides of the separator, the performance of the separator can be improved and regulated. The performance of the separator can be regulated by regulating the type of the filler. For example, a filler having heat-insulating and heat-resistant properties may be added to improve the heat resistance of the separator. The specific type of the material of the base film is not limited, and may include one or more of polyethylene, polypropylene, and glass fiber. These materials are all commercially available.

The electrolyte solution serves to conduct ions between the cathode electrode sheet and the anode electrode sheet, and may include an electrolyte salt and a solvent.

As an example, the electrolyte salt may be selected from one or more lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

As an example, the solvent may be selected from one or more of Ethylene Carbonate (EC), Propylene Carbonate (PC), Methyl Ethyl Carbonate (EMC), Diethyl Carbonate (DEC), Dimethyl Darbonate (DMC), Dipropyl Carbonate (DPC), Methyl Propyl Carbonate (MPC), Diisopropyl Carbonate (EPC), Butylene Carbonate (BC), Fluoroethylene Carbonate (FEC), Methyl Formate (MF), Methyl Acetate (MA), Ethyl Acetate (EA), n-Propyl Acetate (PA), Methyl Propionate (MP), Ethyl Propanoate (EP), n-Propyl Propionate (PP), Methyl Butyrate (MB), Ethyl Butyrate (EB), 1,4-Butyrolactone (GBL), Tetramethylene Sulfone (SF), Methyl Sulfone (MSM), Methyl Ethyl Sulfone (EMS) and Diethyl Sulfone (ESE).

In some implementations, the electrolyte solution further includes an additive. For example, the additive may include an anode film-forming additive, or may include a cathode film-forming additive, and may further include an additive capable of improving certain performances of the battery, such as an additive for improving the overcharging performance of the battery, an additive for improving the high temperature performance of the battery, and an additive for improving the low temperature performance of the battery.

The battery disclosed in the embodiments of the present application can be used in an electrical device that uses a battery as the power source or in various energy storage systems that use a battery as the energy storage element. The electrical device may be, but is not limited to, a mobile phone, a tablet, a laptop, an electric toy, an electric tool, a battery vehicle, an electric car, a ship, a spacecraft, and the like. Among them, the electric toy may include a stationary or mobile electric toy, for example, a game console, an electric toy car, an electric toy ship, an electric toy aircraft, and the like, and the spacecraft may include an aircraft, a rocket, a space shuttle, a spaceship, and the like.

The energy storage system may be a hydropower, thermal, wind power, solar power station, or other energy storage power supply systems.

For ease of description, the following embodiments are illustrated by taking an electrical device being a vehicle 1000 in an embodiment of the present application as an example.

Refer to FIG. 7. FIG. 7 is a schematic structural diagram of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extendedrange vehicle, or the like. A battery 100 is arranged in the vehicle 1000. The battery 100 may be arranged at the bottom or head portion or tail portion of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as the operating power source for the vehicle 1000, but also as the driving power source for the vehicle 1000, to replace or partially replace fuel or natural gas to provide driving power for the vehicle 1000.

The above-mentioned electrical device and energy storage system are also within the protection scope of the present application.

The beneficial effects of the present application are further illustrated below in conjunction with the embodiments.

In order to make the technical problems addressed by, the technical solutions, and the beneficial effects of the embodiments of the present application clearer, the following will further describe them in detail in conjunction with the embodiments and the accompanying drawings. Apparently, the described embodiments are only some of the embodiments of the present application, rather than all the embodiments. The following description of at least one exemplary embodiment is merely illustrative in nature and is in no way intended to limit the present application, and application thereof. Based on the embodiments of the present application, all other embodiments derived by a person of ordinary skill in the art without any creative effort shall all fall within the protection scope of the present application.

### I. Preparation of sensitive layer

A particular amount of temperature drop material (e.g., multi-walled carbon nanotube (MWCNT) powder) and temperature rise material (e.g., graphite platelets (GPs) powder) were weighed respectively according to the mass ratio, placed in a reagent bottle and a particular amount of acetone solution was added as a dispersion medium, and the system was cleaned by an ultrasonic cleaner for 3 h at 30°C water temperature to disperse the agglomerated conductive material (e.g., MWCNT). Then the mixed solution was added to a flexible substrate solution with a mass fraction of 20 wt% (e.g., TPU/DMAc (dimethylacetamide) solution), and the system was fully stirred by a magnetic stirrer at 50°C for 12 h. Meanwhile, the mouth of the reagent bottle was opened to allow the acetone in the solution to volatilize, so as to increase the viscosity of the precursor solution and facilitate the subsequent scraping coating process. The material composition and proportion of various examples are detailed in Table 1.

An infrared laser was used to manufacture corresponding pits on the PDMS mold surface based on the designed structural pattern. The obtained microstructure data are detailed in Table 2.

The processed PDMS mold was ultrasonically cleaned in anhydrous ethanol for 30 min. The mold was preheated to 30°C on a heating table to reduce bubbles during the scraping coating process. A particular volume of precursor solution was then taken using a pipette to the mold surface. After being scraped flat with a glass rod, it was placed on a 50°C heating plate and heated for 1 h. Then the DMAc and acetone solvents were fully volatilized at 120°C.

The cured sensitive layer film was then peeled off from the PDMS mold, cut, and placed in an oven at 80°C for hot pressing and shaping to ensure the flatness of the sensitive layer film. As shown in FIG, 3b, which is an optical microscope image of the sensitive layer film with microstructure, the microstructure has good reverse molding degree, and the 1st, 2nd, and 3rd level microstructures can be clearly distinguished.

### II. Performance test

### Resistivity test

The prepared pressure sensor was placed in a high and low temperature chamber, connected to a matching resistance meter, a 1000N weight was applied, and the initial resistance R₀ was recorded. The external temperature was changed, and a 1000N weight was continued to be applied to record the resistance R, with the resistance change rate = (R-R₀)/R₀.

**Table 1: Parameters of batteries with sensitive layers from examples and comparative examples**

| | Comparativ e example 1 | Comparativ e example 2 | Example 1 | Example 2 | Example 3 | Example 4 | Example 5 | Example 6 |
|---|---|---|---|---|---|---|---|---|
| Flexible substrate | TPU | TPU | TPU | TPU | TPU | TPU | TPU | PDMS |
| Temperature rise material | Graphite | // | Graphite | Graphite | Graphite | Graphite | Graphen e | Graphite |
| Temperature drop material | // | Carbon Nanotubes | Carbon Nanotube s | Carbon Nanotubes | Carbon Nanotub es | Carbon Nanotube s | Ketjen black | Carbon Nanotub es |
| Mass ratio | 1:0 | 0:1 | 5:1 | 10:1 | 12:1 | 15:1 | 12:1 | 12:1 |
| Resistance change rate at -20°C | // | // | // | // | 0.00092 | // | // | // |
| Resistance change rate at 0°C | // | // | // | // | 0.00088 | // | // | // |
| Resistance change rate at 25°C | 0 | 0 | 0 | 0 | 0 | 0 | 0 | 0 |
| Resistance change rate at 40°C | 0.08946 | -0.02120 | -0.02082 | 0.00135 | 0.00128 | 0.02326 | 0.09110 | 0.00131 |
| Resistance change rate at 50°C | 0.09403 | -0.04591 | -0.05080 | -0.00987 | -0.00089 | 0.03835 | 0.13620 | 0.000873 |
| Resistance change rate at 60°C | 0.09689 | -0.10977 | -0.06030 | -0.02770 | -0.00288 | 0.04843 | 0.15590 | -0.00401 |
| Resistance change rate at 70°C | 0.15250 | -0.11166 | -0.09263 | -0.07504 | -0.00388 | 0.06156 | 0.17000 | -0.00520 |
| Resistance change rate at 120°C | // | // | // | // | -0.00405 | // | // | // |
| Resistance change rate at 180°C | // | // | // | // | -0.00590 | // | // | // |

| | | | | | | | | |
|---|---|---|---|---|---|---|---|---|
| Note: The mass ratio refers to the mass ratio of the temperature rise material to the temperature drop material. | | | | | | | | |

**Table 2: Data parameters of protrusion structures of sensitive layers from examples and comparative examples**

| Location | Type | Number | Diameter (µm) | Height (µm) |
|---|---|---|---|---|
| Center | Level 3 | 1 | 300 | 50 |
| Arc 1, diameter 500 µm | Level 2 | 6 | 200 | 30 |
| Arc 2, diameter 1000 µm | Level 1 | 8 | 300 | 10 |
| Arc 3, diameter 1400 µm | Level 2 | 16 | 200 | 30 |
| Arc 4, diameter 1800 µm | Level 3 | 12 | 300 | 50 |
| Arc 5, diameter 2100 µm | Level 2 | 12 | 200 | 30 |
| Arc 6, diameter 3100 µm | Level 3 | 4 | 300 | 50 |
| Distance from corner to arc 6 500 µm | Level 3 | 8 | 300 | 50 |

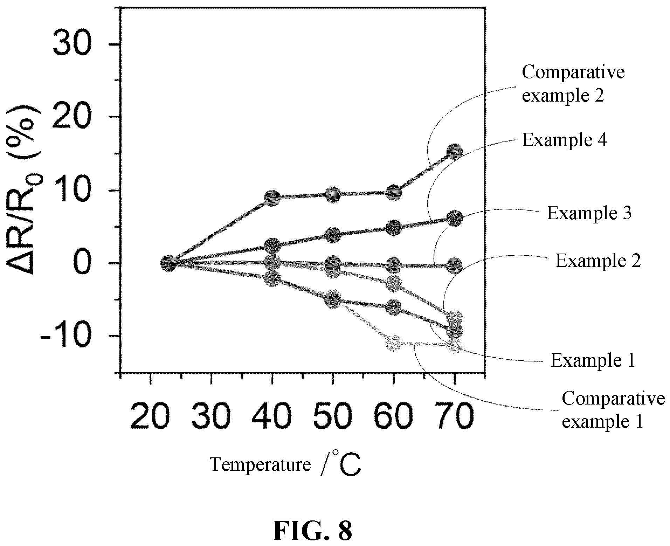

The data in Table 1 is used in combination with FIG. 8, which is a schematic graph showing curves of resistance change rate as a function of temperature according to the examples and comparative examples. In the solutions of the present application, by mixing the temperature rise material and the temperature drop material, the resistance increased by the temperature rise material is balanced by the resistance decreased by the temperature drop material, or the resistance decreased by the temperature drop material is balanced by the resistance increased by the temperature rise material, so that the resistance of a mixed material does not change significantly when the temperature changes, that is, the resistivity of the mixed material is substantially not affected by the temperature, such that the detection sensitivity of a sensor at different temperatures is improved, thereby reducing detection errors caused by a temperature change, which can extend the usage temperature range of the sensor, and improve the detection sensitivity. Meanwhile, manufacturing a specific microstructure on the sensitive layer that is in contact with the electrode can change the contact characteristics between the sensitive layer and the electrode, thereby improving or regulating the piezoresistive characteristics of the sensor. The introduction of microstructures of specific shapes can improve the sensitivity, measurement range, and other performance indicators of the pressure sensors to a certain extent.

The description above is made of only implementations of the present application and is not intended to limit the patent scope of the present application. Any variations with equivalent structure and equivalent flow made using the specification and drawings of the present application, which are directly or indirectly applied in other relevant technical fields, shall equally fall within the patent protection scope of the present application.

## Claims

1. A conductive material for a pressure sensitive layer, comprising a flexible substrate and conductive particles dispersed in the flexible substrate, wherein the conductive particles comprise a temperature rise material and a temperature drop material, the temperature rise material is a material having a resistivity that increases as the temperature rises, the temperature drop material is a material having a resistivity that decreases as the temperature rises, a ratio of the temperature drop material to the temperature rise material is set so that within a temperature range of -40°C to +200°C, an absolute value of a change rate of the resistivity of the conductive material is less than or equal to 0.01.

2. The conductive material according to claim 1, wherein the ratio of the temperature drop material to the temperature rise material is set so that within a temperature range of +25°C to +80°C, the absolute value of the change rate of the resistivity of the conductive material is less than or equal to 0.008.

3. The conductive material according to claim 1 or 2, wherein the ratio of the temperature drop material to the temperature rise material is set so that within the temperature range of -40°C to +200°C, the absolute value of the change rate of the resistance of the conductive material is less than or equal to 0.01.

4. The conductive material according to claim 3, wherein
the ratio of the temperature drop material to the temperature rise material is set so that within a temperature range of +25°C to +80°C, the absolute value of the change rate of the resistance of the conductive material is less than or equal to 0.008.

5. The conductive material according to any one of claims 1 to 4, wherein within the temperature range of -40°C to +200°C, a ratio of the absolute values of the temperature coefficient of resistance of the temperature rise material to that of the temperature drop material is in a range of 30: 1-1:30;
wherein the temperature coefficient of resistance is a relative change in the resistance value of a material when the temperature changes by 1 degree Celsius.

6. The conductive material according to any one of claims 1 to 5, wherein within the temperature range of -40°C to +200°C, the absolute value of the ratio of the change rate of the resistivity of the temperature rise material to that of the temperature drop material is in a range of 25: 1-1:25.

7. The conductive material according to any one of claims 1 to 6, wherein a mass ratio of the temperature rise material to the temperature drop material is in a range of 15:1-1:20.

8. The conductive material according to any one of claims 1 to 7, wherein
the conductivity of the temperature rise material is greater than 1 S·m⁻¹; and/or
the conductivity of the temperature drop material is greater than 1 S·m⁻¹; and/or
the conductivity of the conductive material is greater than 1 S·m⁻¹.

9. The conductive material according to any one of claims 1 to 8, wherein the temperature rise material includes one or more of graphite, gold powder, silver powder, nickel powder, zinc-chromium alloy, nickel-copper alloy, and the like.

10. The conductive material according to any one of claims 1 to 9, wherein the temperature drop material includes one or more of carbon nanotubes, Ketjen black, graphene, carbon black, and ceramic materials with metal oxides of manganese, cobalt, nickel, and copper as main materials.

11. The conductive material according to any one of claims 1 to 10, wherein the conductive particles include graphite particles and carbon nanotube particles, and the mass ratio of the graphite particles to the carbon nanotube particles is in a range of 1:1-1:20, and optionally 1:9-1:15.

12. The conductive material according to claim 11, wherein
the carbon nanotube particles comprise multi-walled carbon nanotube particles, and the multi-walled carbon nanotube particles have an outer diameter in a range of 6-13 nm and a length in a range of 2.5-20 µm; and/ or
the graphite particles have a particle size Dv50 in a range of 7-10 µm.

13. The conductive material according to any one of claims 1-12, wherein
a mass ratio of the flexible substrate to the conductive particles is in a range of 15:1-5:1, and optionally 12:1-8:1.

14. The conductive material according to claim 13, wherein
the flexible substrate includes one or more of thermoplastic polyurethane, polyvinyl alcohol, chloroprene rubber, nitrile rubber, styrene-butadiene block copolymer, and polyacrylic acid, and optionally is an aliphatic thermoplastic polyurethane.

15. A pressure sensor, comprising:
an electrode layer; and
a sensitive layer made of the conductive material of any one of claims 1 to 14.

16. The pressure sensor according to claim 15, wherein
the sensitive layer comprises a base layer and at least two protrusion structures protruding from the base layer at different heights, each of the protrusion structures comprises at least one protrusion, each of the protrusions is located on a side of the base layer facing the electrode layer, and a contact area between each of the protrusions and the electrode layer is configured to change with the change of the pressure applied to the electrode layer.

17. A method for preparing a pressure sensitive layer, comprising:
providing a flexible substrate slurry;
adding conductive particles to the flexible substrate slurry, wherein the conductive particles comprise a temperature rise material and a temperature drop material, the temperature rise material is a material having a resistivity that increases as the temperature rises, the temperature drop material is a material having a resistivity that decreases as the temperature rises, and a ratio of the temperature drop material to the temperature rise material is set so that within a temperature range of -40°C to +200°C, an absolute value of a change rate of the resistivity of the conductive material is less than or equal to 0.01; and
curing the flexible substrate slurry to form the pressure sensitive layer.

18. A battery cell, comprising a housing and a pressure sensor of claim 15 or 16, wherein the pressure sensor is arranged inside the housing.

19. An electrical device, comprising the battery cell of claim 18.
